# EUROPEAN PATENT SPECIFICATION

(11) **EP 2 935 799 B1**
(45) Date of publication and mention of the grant of the patent: **06.05.2020**
(21) Application number: 13866382.8
(22) Date of filing: 19.12.2013
(51) Int. Cl.: F01D 9/04, F01D 9/02, F02C 7/00, F01D 25/16

(54) **MANUFACTURE OF FULL RING STRUT VANE PACK**
HERSTELLUNG EINES VOLLRINGSTREBENSCHAUFELGEHÄUSES
FABRICATION D'ENSEMBLE AUBE À ENTRETOISE DE COURONNE COMPLÈTE

(30) Priority: 21.12.2012 US 201213723941
(43) Date of publication of application: 28.10.2015
(73) Proprietor: United Technologies Corporation, Farmington, CT 06032 (US)
(72) Inventor: DUELM, Shelton O., Wethersfield, Connecticut 06109 (US); MCCAFFREY, Michael G., Windsor, Connecticut 06095 (US)
(74) Representative: Dehns
(86) International application number: PCT/US2013/076415
(87) International publication number: WO 2014/100347

(56) References cited:
- EP-A2- 0 253 994
- GB-A- 2 207 629
- GB-A- 2 226 086
- JP-A- H07 189 607
- US-A- 4 987 736
- US-A1- 2006 171 812
- US-A1- 2006 228 211
- US-A1- 2012 301 303
- US-A1- 2012 301 312
- US-A1- 2012 301 312
- US-A1- 2012 301 313

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

Blades and vanes within the turbine section encounter elevated temperatures that require either provisions for cooling or the use of temperature compatible materials. Moreover, it is desired to limit leakage of hot gases between adjacent vanes in the turbine section and therefore sealing features that are also compatible with the elevated temperatures within the gas path are utilized.

Accordingly, it is desirable to design and develop turbine elements such as vanes that balance performance and expense to provide a desired performance and cost effectiveness. Although current gas turbine engines are increasingly more efficient, turbine engine manufacturers continue to seek further improvements to engine performance including improvements to thermal, transfer and propulsive efficiencies.

US 2012/30132 A1 discloses a Ceramic Matrix Composite airfoil segment for a gas turbine engine. The vanes are manufactured to define a ring-strut-ring full hoop structure.

GB 2207629 A discloses a method of manufacturing an axial flow compressor stator assembly in which a plurality of aerofoil cross-section stator vanes having divergent outer and inner extents are encapsulated in a low melting point alloy so that their extents protrude from the alloy. The vanes are encapsulated in the same relationship with respect to each other which they would assume in a compressor. A moulding material e.g. epoxy resin is then moulded around the radially inner and outer extents to define arcuate bridging pieces which interconnect adjacent stator vanes.

US 2006/228211 A1 discloses a turbine vane assembly including an airfoil portion, an outer shroud and an inner shroud. The airfoil portion can be made of at least two segments. Preferably, the components are connected together so as to permit assembly and disassembly of the vane.

### SUMMARY

According to an aspect of the present invention there is provided a vane assembly for a gas turbine engine as claimed in claim 1.

More detailed embodiments of the invention are defined by appended dependent claims 2-8.

According to another aspect of the present invention there is provided a method of assembling a full ring vane pack as claimed in claim 9.

More detailed embodiments of the inventive method are defined in appended dependent claims 10-13.

Although the different examples have the specific components shown in the illustrations, embodiments of this disclosure are not limited to those particular combinations. It is possible to use some of the components or features from one of the examples in combination with features or components from another one of the examples, as long as the resulting embodiment comprises at least all features and method steps of one of the appended independent claims.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a section looking from the rear to the front through a center of an example mid turbine frame.
Figure 3 is a close up cross-section of the gas turbine engine.
Figure 4 is a side view of an example vane pack assembly.
Figure 5 is an enlarged view of the example vane pack assembly.
Figure 6 is a perspective view of an example vane segment.

### DETAILED DESCRIPTION

Any embodiment falling into the scope of the present invention comprises at least all features of appended independent claim 1 or at least all features and method steps of appended independent claim 9.

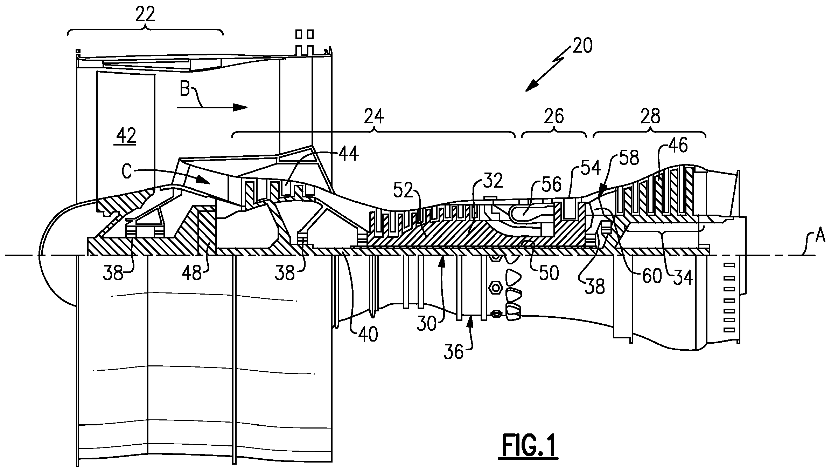

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about five (5). The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core flow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 10,668 meters (35,000 feet). The flight condition of 0.8 Mach and 10,668 m (35,000 ft.), with the engine at its best fuel consumption - also known as "bucket cruise Thrust Specific Fuel Consumption ('TSFC')" - is the industry standard parameter of Kg (pound-mass (lbm)) of fuel per hour being burned divided by Newton (N) (pound-force (lbf)) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in m/s (ft/sec divided by an industry standard temperature correction of ([Tram K)(518.7K)]^{0.5} ([(Tram °R)/(518.7°R)]^{0.5}). The "Low corrected fan tip speed", as disclosed herein according to one non-limiting embodiment, is less than about 350 m/s (1150 ft/second).

The example gas turbine engine includes the fan 42 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

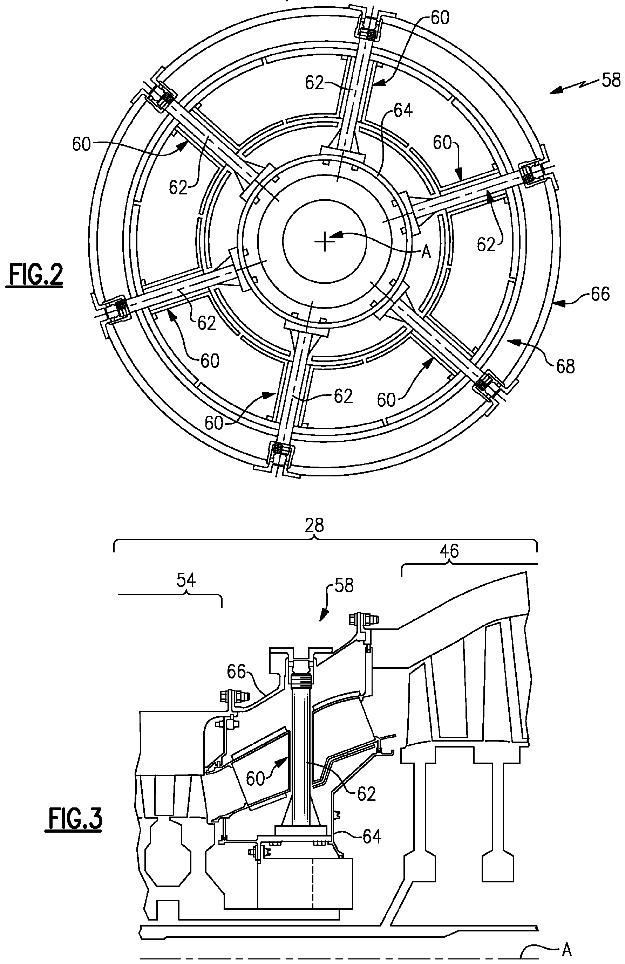

Referring to Figures 2 and 3 with continued reference to Figure 1, the example mid turbine frame 58 includes a tie rod 62 that extends from an outer case 66 through a vane pack 68 to an inner case 64. The tie rods 62 extend through the vane pack 68 and specifically through openings within individual vane segments 70.

The example vane pack 68 includes a plurality of vane segments that define an annular ring about the engine axis A. The vane pack 68 defines a gas flow path between the high pressure turbine 54 and the low pressure turbine 46. Moreover, the mid turbine frame 58 provides for the support of bearing structures that support rotation of the high and low shafts 40, 50.

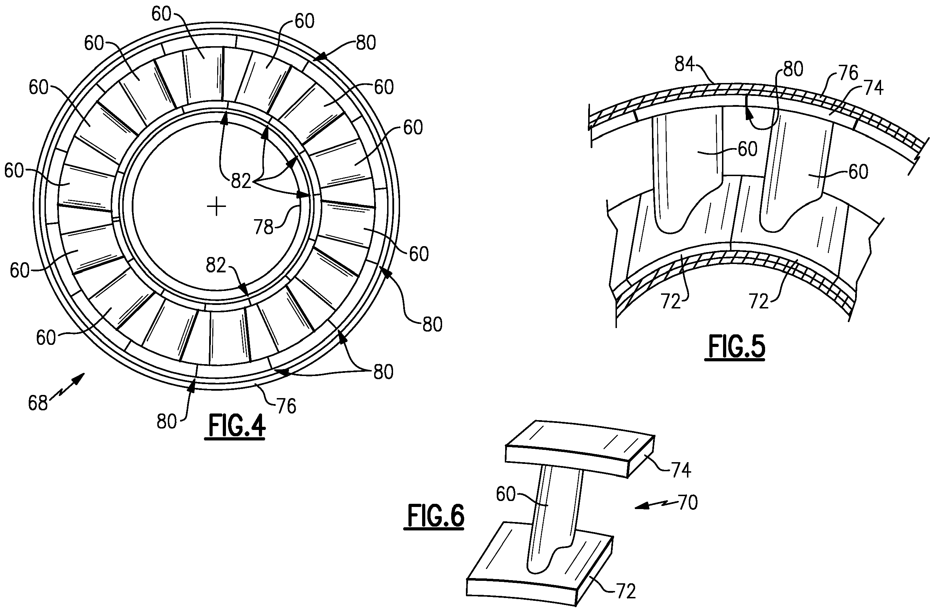

Referring to Figures 4, 5 and 6, the example vane pack assembly 68 includes ceramic matrix composite vane segments 70 that includes the airfoil 60 disposed between an inner platform 72 and an outer platform 74. A plurality of vane segments 70 are arranged in an annular ring that includes an inner periphery and an outer periphery. The inner periphery is defined by the inner platform 72 and the outer periphery is defined by the outer platform 74.

It should be understood that although the disclosed vane segments 70 include only a single airfoil 60 between the platforms 72, 74, referred commonly to as a singlet, other vane segment configurations that include more than one airfoil 60 between common platforms 72, 74 commonly known as doublets are also within the contemplation of this disclosure. Moreover, doublets, triplets or any number of vane segment configurations are within the contemplation of this disclosure.

Each of the individual vane segments 70 are fabricated from a ceramic matrix composite material as an individual unit and assembled into the desired annular ring configuration illustrated in Figure 4. Once the individual vane segments 70 are arranged in the annular ring configuration, an outer wrap 76 is wrapped around the outer periphery defined by the outer platform 74. The outer wrap 76 extends over an interface 80 between abutting individual vane segments 70.

In this example, the outer wrap 76 also comprises a ceramic matrix composite wrap that is wrapped about the entire circumference of the vane pack assembly 68. The outer wrap 76 may also include a silicon carbide monofilaments commonly referred to SCS-6. The use of the silicon carbide monofilaments adds additional strength and provides a full hoop structure along with the ceramic matrix composite wrap about the outer platforms to provide the desired structural rigidity of the vane pack assembly 68.

An inner wrap 78 is also provided that overlaps interfaces 82 between adjacent inner platforms 72 of the various individual vane segments 70. The inner wrap 78 may also include the silicon carbide monofilament material 84 to provide the desired additional strength and structural rigidity.

The example vane pack 68 is fabricated by first assembling a plurality of individually cured vane segments 70. The vane segments 70 may be fully cured or partially cured. Each of the vane segments 70 are individually formed and assembled in the desired annular ring configuration.

The annular ring configuration includes the inner ring defined by the inner platform 72 with the airfoil segments 60 extending from the inner platform 72 to the outer platform 74 that defines the outer ring. An interface 80 between each of the adjacent outer platforms 74 is covered by a wrap material 76. In this example, the wrap material 76 comprises a ceramic matrix composite fabric material wrapped about the outer periphery to overlap each of the interfaces 80 between adjacent vane segments 70. The over wrap material 76 is applied in plies to build a layer of material over the interfaces 80 to further reduce leakage and provide the desired structural rigidity.

In one example, the example vane segments 70 are assembled in the annular ring configuration when in a partially cured condition. The over wrap material 76 is then wrapped about the outer periphery also in an uncured condition. The entire assembly is then finished cured at the same time to provide the desired finished structure in a fully cured state.

In a further example, each of the plurality of vane segments 70 is fully cured prior to assembly into the annular ring configuration. Prior curing and fabrication of each of the plurality of segments 70 enables the use of structural segments to form the entire vane pack assembly 68. Prior configurations sought to fabricate the entire vane pack assembly from a ceramic matrix composite material all at the same time and incurred substantial manufacturing expense and provided unpredictable results.

Accordingly, the example method and vane pack assembly provides a ceramic matrix composite structure that can be fabricated from individually cured vane segments to reduce the manufacturing cost and complexity. The addition of the wrap material 76 about the outer periphery reduces leakage through interfaces 80 between adjacent vane segments 70. Moreover, the over wrap 76 provides the desired structural rigidity and a full hoop support structure capable of maintaining the desired structure rigidity of the vane pack assembly 68. The example wraps 76 and 78 are applied in a flexible material sheet form and cured along with the finished curing of the individual vane segments.

Accordingly, the example vane pack assembly provides a ceramic matrix composite assembly that can be utilized throughout the turbine section and that provides low leakage through the interfaces between the adjacent vane segments 70. Moreover, the disclosed assembly technique and method enables more efficient fabrication of a strut ring vane pack. The example ring structure as provided by the example vane pack 68 further reduces the amount of leakage and provides for the separate vanes 70 to be assembled into a ring to provide the desired flow area and aerodynamic characteristics.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A vane assembly (68) for a gas turbine engine comprising:
a plurality of individual vane segments (70) forming an annular ring with each of the plurality of vane segments (70) formed of a ceramic matrix composite including at least one airfoil (60) extending between an inner platform (72) and an outer platform (74); and
a ceramic matrix composite wrap (76, 78) disposed about one of an outer periphery and an inner periphery of the annular ring and over an interface between a corresponding inner and outer platform of adjacent ones of the plurality of vane segments (70), **characterised in that**
the vane assembly further comprises a plurality of tie rods (62),
each of the plurality of individual vane segments includes a cavity extending through the outer platform, the at least one airfoil, the inner platform, and the ceramic matrix composite wrap;
and the ceramic matrix composite wrap is attached to the one of an outer periphery and an inner periphery of the annular ring, such that each of the plurality of individual vane segments is fixed to the ceramic matrix composite wrap, each tie rod (62) extending from an outer case (66) through a cavity of one of the plurality of individual vane segments to an inner case (64).

2. The vane assembly as claimed in claim 1, wherein the wrap comprises an outer wrap (76) disposed about the outer periphery and covering the interface between outer platforms (74) of adjacent ones of the plurality of vane segments (70).

3. The vane assembly as claimed in claim 1 or 2, wherein the wrap comprises an inner wrap (78) attached to an inner periphery of the annular ring over an interface (82) between inner platforms (72) of adjacent ones of the plurality of vane segments (70).

4. A mid-turbine frame for a gas turbine engine comprising:
a vane assembly as claimed in any preceding claim, wherein each tie-rod (62) is attached at a first end to an outer case structure (66) and on a second end to an inner case structure (64).

5. The vane assembly or mid turbine frame as claimed in any preceding claim, wherein the wrap or the outer wrap (76) and the inner wrap (78) comprise a ceramic matrix composite material.

6. The vane assembly or mid turbine frame as claimed in any preceding claim, wherein the wrap, or at least one of the outer wraps (76) and inner wrap (78) includes a silicon carbide monofilament.

7. The vane assembly or mid turbine frame as claimed in any preceding claim, wherein the wrap, or at least one of the inner wrap (78) and outer wrap (76), comprises a plurality of plies applied to the plurality of vane segments.

8. The vane assembly or mid turbine frame as claimed in any preceding claim, wherein the plurality of vane segments (70) are at least partially cured prior to installation of the wrap.

9. A method of assembling a full ring vane pack (68) comprising:
forming a plurality of vane segments (70) from a ceramic matrix composite material including at least one airfoils (60) extending between an outer platform (72) and an inner platform (74);
assembling an annular ring with the plurality of vane segments (70) by abutting corresponding outer platforms (72) and inner platforms (74); and
wrapping an outer periphery of the annular ring with a ceramic matrix composite material over an interface between outer platforms (72) of adjacent ones of the plurality of vane segments (70), **characterised by**
assembling a support tie-rod extending through the outer platform of at least one of the vane segments and the ceramic matrix composite material wrapped around the periphery for attachment to an outer case structure and to an inner case structure.

10. The method as claimed in claim 9, including wrapping an inner periphery of the annular ring with a ceramic matrix composite material over an interface (82) between inner platforms (74) of adjacent ones of the plurality of vane segments (70).

11. The method as claimed in claim 9 or 10, including curing the wrapped ceramic matrix composite material around the plurality of vane segments (70).

12. The method as claimed in claim 9, 10 or 11, wherein each of the plurality of vane segments (70) are fully cured prior to assembly into the annular ring.

13. The method as claimed in claim 9, 10 or 11, wherein each of the plurality of vane segments (70) are not fully cured when assembled into the annular ring and both the outer ceramic matrix composite wrapping and plurality of vane segments (70) are finish cured together.

## Patentansprüche

1. Schaufelanordnung (68) für ein Gasturbinentriebwerk, Folgendes umfassend:
eine Vielzahl von einzelnen Schaufelsegmenten (70), die einen kreisförmigen Ring bilden, wobei jedes der Vielzahl von Schaufelsegmenten (70) aus einem keramischen Matrixverbundstoff gebildet ist, einschließlich mindestens eines Schaufelblatts (60), das sich zwischen einer Innenplattform (72) und einer Außenplattform (74) erstreckt; und
eine keramische Matrixverbundstoff-Umwicklung (76, 78), die um eine von einer Außenperipherie und einer Innenperipherie des kreisförmigen Rings und über einer Schnittstelle zwischen einer entsprechenden Innen- und Außenplattform von benachbarten Schaufelsegmenten der Vielzahl von Schaufelsegmenten (70) angeordnet ist, **dadurch gekennzeichnet, dass**
die Schaufelanordnung ferner eine Vielzahl von Zugankern (62) umfasst,
jedes der Vielzahl von einzelnen Schaufelsegmenten einen Hohlraum beinhaltet, der sich durch die Außenplattform, das mindestens eine Schaufelblatt, die Innenplattform und die keramische Matrixverbundstoff-Umwicklung erstreckt;
und die keramische Matrixverbundstoff-Umwicklung an der einen von einer Außenperipherie und einer Innenperipherie des kreisförmigen Rings angebracht ist, sodass jedes der Vielzahl von einzelnen Schaufelsegmenten an der keramischen Matrixverbundstoff-Umwicklung befestigt ist, wobei sich jeder Zuganker (62) von einem Außengehäuse (66) durch einen Hohlraum eines der Vielzahl von einzelnen Schaufelsegmenten zu einem Innengehäuse (64) erstreckt.

2. Schaufelanordnung nach Anspruch 1, wobei die Umwicklung eine Außenumwicklung (76) umfasst, die um die Außenperipherie angeordnet ist und die Schnittstelle zwischen den Außenplattformen (74) benachbarter Schaufelsegmente der Vielzahl von Schaufelsegmenten (70) bedeckt.

3. Schaufelanordnung nach Anspruch 1 oder 2, wobei die Umwicklung eine Innenumwicklung (78) umfasst, die an einer Innenperipherie des kreisförmigen Rings über einer Schnittstelle (82) zwischen Innenplattformen (72) benachbarter Schaufelsegmente der Vielzahl von Schaufelsegmenten (70) angebracht ist.

4. Mittelturbinenrahmen für ein Gasturbinentriebwerk, Folgendes umfassend:
eine Schaufelanordnung nach einem der vorangehenden Ansprüche, wobei jeder Zuganker (62) an einem ersten Ende an einer Außengehäusestruktur (66) und an einem zweiten Ende an einer Innengehäusestruktur (64) angebracht ist.

5. Schaufelanordnung oder Mittelturbinenrahmen nach einem der vorangehenden Ansprüche, wobei die Umwicklung oder die Außenumwicklung (76) und die Innenumwicklung (78) ein keramisches Matrixverbundstoffmaterial umfasst.

6. Schaufelanordnung oder Mittelturbinenrahmen nach einem der vorangehenden Ansprüche, wobei die Umwicklung oder zumindest eine von der Außenumwicklung (76) und der Innenumwicklung (78) ein Silizium-Kohlenstoff-Monofilament beinhaltet.

7. Schaufelanordnung oder Mittelturbinenrahmen nach einem der vorangehenden Ansprüche, wobei die Umwicklung oder zumindest eine von der Innenumwicklung (78) und der Außenumwicklung (76) eine Vielzahl von Lagen umfasst, die auf der Vielzahl von Schaufelsegmenten aufgebracht ist.

8. Schaufelanordnung oder Mittelturbinenrahmen nach einem der vorangehenden Ansprüche, wobei die Vielzahl von Schaufelsegmenten (70) vor Installation der Umwicklung zumindest teilweise gehärtet wird.

9. Verfahren zum Zusammenbauen eines Vollringstrebenschaufelgehäuses (68), Folgendes umfassend:
Bilden einer Vielzahl von einzelnen Schaufelsegmenten (70) aus einem keramischen Matrixverbundstoff, einschließlich mindestens eines Schaufelblatts (60), das sich zwischen einer Außenplattform (72) und einer Innenplattform (74) erstreckt;
Zusammenbauen eines kreisförmigen Rings mit der Vielzahl von Schaufelsegmenten (70) durch Angrenzen entsprechender Außenplattformen (72) und Innenplattformen (74); und
Umwickeln einer Außenperipherie des kreisförmigen Rings mit einem keramische Matrixverbundstoffmaterial über einer Schnittstelle zwischen Außenplattformen (72) von benachbarten Schaufelsegmenten der Vielzahl von Schaufelsegmenten (70), **gekennzeichnet durch**
Zusammenbauen eines Stützzugankers, der sich durch die Außenplattform von mindestens einem der Vielzahl von Schaufelsegmenten und dem keramischen Matrix-Verbundstoffmaterial, das um die Peripherie gewickelt ist, erstreckt, zum Anbringen an einer Außengehäusestruktur und an einer Innengehäusestruktur.

10. Verfahren nach Anspruch 9, beinhaltend Umwickeln einer Innenperipherie des kreisförmigen Rings mit einem keramischen Matrix-Verbundstoffmaterial über einer Schnittfläche (82) zwischen Innenplattformen (74) von benachbarten Schaufelsegmenten der Vielzahl von Schaufelsegmenten (70).

11. Verfahren nach Anspruch 9 oder 10, beinhaltend Härten des keramischen Matrix-Verbundstoffmaterials, das um die Vielzahl von Schaufelsegmenten (70) gewickelt ist.

12. Verfahren nach Anspruch 9, 10 oder 11, wobei jedes der Vielzahl von Schaufelsegmenten (70) vor Einbau in den kreisförmigen Ring voll gehärtet wird.

13. Verfahren nach Anspruch 9, 10 oder 11, wobei jedes der Vielzahl von Schaufelsegmenten (70) nicht voll gehärtet ist, wenn es in den kreisförmigen Ring eingebaut wird, und sowohl die keramische Verbundstoff-Außenumwicklung als auch die Vielzahl von Schaufelsegmenten (70) zusammen fertiggehärtet werden.

## Revendications

1. Ensemble d'aubes (68) pour un moteur à turbine à gaz comprenant :
une pluralité de segments d'aube individuels (70) formant une couronne annulaire avec chacun de la pluralité de segments d'aube (70) formés d'un composite à matrice céramique comportant au moins un profil aérodynamique (60) s'étendant entre une plate-forme intérieure (72) et une plate-forme extérieure (74) ; et
une enveloppe composite à matrice céramique (76, 78) disposée autour de l'une d'une périphérie extérieure et d'une périphérie intérieure de la couronne annulaire et sur une interface entre une plate-forme intérieure et extérieure correspondante de ceux adjacents de la pluralité de segments d'aube (70), **caractérisé en ce que**
l'ensemble d'aubes comprend en outre une pluralité de tirants (62),
chacun de la pluralité de segments d'aube individuels comporte une cavité s'étendant à travers la plate-forme extérieure, l'au moins un profil aérodynamique, la plate-forme intérieure et l'enveloppe composite à matrice céramique ;
et l'enveloppe composite à matrice céramique est fixée à l'une d'une périphérie extérieure et d'une périphérie intérieure de la couronne annulaire, de sorte que chacun de la pluralité de segments d'aube individuels est fixé à l'enveloppe composite à matrice céramique, chaque tirant (62) s'étendant depuis un boîtier externe (66) à travers une cavité de l'un de la pluralité de segments d'aube individuels vers un boîtier interne (64).

2. Ensemble d'aubes selon la revendication 1, dans lequel l'enveloppe comprend une enveloppe extérieure (76) disposée autour de la périphérie extérieure et couvrant l'interface entre les plates-formes extérieures (74) de ceux adjacents de la pluralité de segments d'aube (70).

3. Ensemble d'aubes selon la revendication 1 ou 2, dans lequel l'enveloppe comprend une enveloppe intérieure (78) fixée à une périphérie intérieure de la couronne annulaire sur une interface (82) entre des plates-formes intérieures (72) de ceux adjacents de la pluralité de segments d'aube (70).

4. Cadre de turbine intermédiaire pour un moteur à turbine à gaz comprenant :
un ensemble d'aubes selon une quelconque revendication précédente, dans lequel chaque tirant (62) est fixé à une première extrémité à une structure de boîtier externe (66) et à une seconde extrémité à une structure de boîtier interne (64).

5. Ensemble d'aubes ou cadre de turbine intermédiaire selon une quelconque revendication précédente, dans lequel l'enveloppe ou l'enveloppe extérieure (76) et l'enveloppe intérieure (78) comprennent un matériau composite à matrice céramique.

6. Ensemble d'aubes ou cadre de turbine intermédiaire selon une quelconque revendication précédente, dans lequel l'enveloppe, ou au moins l'une des enveloppes extérieures (76) et enveloppe intérieure (78) comporte un monofilament en carbure de silicium.

7. Ensemble d'aubes ou cadre de turbine intermédiaire selon une quelconque revendication précédente, dans lequel l'enveloppe, ou au moins l'une de l'enveloppe intérieure (78) et de l'enveloppe extérieure (76), comprend une pluralité de plis appliqués à la pluralité de segments d'aube.

8. Ensemble d'aubes ou cadre de turbine intermédiaire selon une quelconque revendication précédente, dans lequel la pluralité de segments d'aube (70) sont au moins partiellement durcis avant l'installation de l'enveloppe.

9. Procédé d'assemblage d'un ensemble aube de couronne complète (68) comprenant :
la formation d'une pluralité de segments d'aube (70) à partir d'un matériau composite à matrice céramique comportant au moins un profil aérodynamique (60) s'étendant entre une plate-forme extérieure (72) et une plate-forme intérieure (74) ;
l'assemblage d'une couronne annulaire avec la pluralité de segments d'aube (70) en venant en butée contre les plates-formes extérieures (72) et intérieures (74) correspondantes ; et
l'enveloppement d'une périphérie extérieure de la couronne annulaire avec un matériau composite à matrice céramique sur une interface entre des plates-formes extérieures (72) de ceux adjacents de la pluralité de segments d'aube (70), **caractérisé par**
l'assemblage d'un tirant de support s'étendant à travers la plate-forme extérieure d'au moins l'un des segments d'aube et du matériau composite à matrice céramique enroulé autour de la périphérie pour une fixation sur une structure de boîtier externe et sur une structure de boîtier interne.

10. Procédé selon la revendication 9, comportant l'enveloppement d'une périphérie intérieure de la couronne annulaire avec un matériau composite à matrice céramique sur une interface (82) entre des plates-formes intérieures (74) de ceux adjacents de la pluralité de segments d'aube (70).

11. Procédé selon la revendication 9 ou 10, comportant le durcissement du matériau composite à matrice céramique enveloppé autour de la pluralité de segments d'aube (70).

12. Procédé selon la revendication 9, 10 ou 11, dans lequel chacun de la pluralité de segments d'aube (70) est complètement durci avant d'être assemblé dans la couronne annulaire.

13. Procédé selon la revendication 9, 10 ou 11, dans lequel chacun de la pluralité de segments d'aube (70) n'est pas complètement durci lorsqu'il est assemblé dans la couronne annulaire et à la fois l'enveloppe composite à matrice céramique extérieure et la pluralité de segments d'aube (70) sont durcies pour finition ensemble.
